# EUROPÄISCHE PATENTSCHRIFT

(11) **EP 1 051 875 B1**
(45) Veröffentlichungstag und Bekanntmachung des Hinweises auf die Patenterteilung: **16.05.2001**
(21) Anmeldenummer: 99932433.8
(22) Anmeldetag: 26.01.1999
(51) Int. Cl.: H04Q 7/38, H04Q 7/32, H04M 1/72, H04L 12/28

(54) **VERFAHREN SOWIE SYSTEM ZUR SCHNURLOSEN DATENKOMMUNIKATION**
METHOD AND SYSTEM FOR RADIO COMMUNICATION
PROCEDE ET SYSTEME DE RADIOCOMMUNICATION

(30) Priorität: 26.01.1998 DE 19802867
(43) Veröffentlichungstag der Anmeldung: 15.11.2000
(73) Patentinhaber: Dosch & Amand GmbH & Co. KG, 81679 München (DE)
(72) Erfinder: GLOGER, Marcus G., 81735 München (DE)
(74) Vertreter: Grünecker, Kinkeldey, Stockmair & Schwanhäusser Anwaltssozietät
(86) Internationale Anmeldenummer: EP9900506
(87) Internationale Veröffentlichungsnummer: WO9938345

(56) Entgegenhaltungen:
- EP-A- 0 726 690
- EP-A- 0 743 801
- WO-A-96/22001

## Beschreibung

Die vorliegende Erfindung betrifft ein Verfahren sowie ein System zur schnurlosen Datenkommunikation und betrifft insbesondere ein Verfahren sowie ein System zur schnurlosen Datenkommunikation im DECT-Standard.

Ein schnurloses Datenkommunikationssystem besteht üblicherweise aus einer oder mehreren Basisstationen sowie aus einer Vielzahl von Mobilstationen, die über Funkverbindung mit jeweils einer Basisstation kommunizieren. Ein Gesprächsaufbau zwischen einer ersten Mobilstation mit einer zweiten Mobilstation erfolgt durch Vermittlung einer oder mehrerer Basisstationen. Bei einem System, das nur eine Basisstation aufweist, wird zur Kommunikation zwischen einer ersten Teilnehmerstation mit einer zweiten Teilnehmerstation ein Kommunikationspfad zwischen der ersten Teilnehmerstation und der Basisstation sowie ein weiterer Kommunikationspfad zwischen der Basisstation und der zweiten Teilnehmerstation aufgebaut. Die Kommunikation zwischen der ersten Teilnehmerstation mit der zweiten Teilnehmerstation erfolgt somit durch Vermittlung der Basisstation. Bei Systemen mit mehreren Basisstationen kann der Pfad zu der zweiten Teilnehmerstation durch eine andere Basisstation bereitgestellt werden, wobei dann eine interne Kommunikation zwischen der ersten und der weiteren Basisstation zusätzlich erforderlich ist.

Aufgrund der Architektur von schnurlosen oder mobilen Datenkommunikationssystemen werden also zum Aufbau einer Kommunikation zwischen zwei Mobilteilnehmern zwei Einzelkommunikationen zwischen jeweils einer Mobilstation und einer Basisstation benötigt, wodurch die Systemkapazität stark belastet wird.

Das Erfordernis von zwei separaten Kommunikationspfaden zum Aufbau einer Verbindung zwischen zwei Mobilstationen belastet das System insbesondere dann. wenn zur Übertragung hoher Datenraten mehrere Kanäle gebundelt werden Aus EP-A-0 743 801 ist ein Verfahren zur schnurlosen Datenkommunikation zwischen mindestens einer Basisstation sowie mindestens ersten und zweiten Teilnehmerstationen, die jeweils über eine Luftschnittstelle über eine Vielzahl von Kanälen in Kommunikation treten können, bekannt. Gemäß dem angegebenen Verfahren wird eine erste Verbindung zwischen der ersten Teilnehmerstation und der Basisstation aufgebaut, es werden Verbindungsinformationen für den Aufbau einer zweiten Verbindung zwischen der ersten und der zweiten Teilnehmerstation übertragen, es wird eine zweite Verbindung zwischen der ersten und zweiten Teilnehmerstation aufgebaut, und es werden Daten über die zweite Verbindung zwischen der ersten und zweiten Teilnehmerstation unter Umgehung der Basisstation übertragen.

Aus EP-A-0 726 690 ist ein ähnliches Verfahren bekannt, welches dazu dient, die Verkehrskapazität in einem drahtlosen Kommunikationssystem, insbesondere dem DECT-System, zu erhöhen.

Ausgehend von dem bekannten Stand der Technik ist es die Aufgabe der vorliegenden Erfindung, ein Verfahren sowie ein System zur Datenkommunikation anzugeben, bei dem Verbindungen zwischen Mobilstationen in einer Art und Weise bereitgestellt werden, die zu einer geringeren Belastung der Systemkapazität führen.

Diese Aufgabe wird durch den Gegenstand der Ansprüche 1 und 14 gelöst.

Bevorzugte Ausgestaltungen der vorliegenden Erfindung sind Gegenstand der Unteransprüche.

Gemäß der vorliegenden Erfindung erfolgt somit eine direkte Kommunikation zwischen zwei Mobilstationen unter Umgehung der Basisstation, wobei für diese Kommunikation zusätzlich eine oder mehrere weitere Mobilstationen zur Überbrückung weiter Strecken verwendet werden können.

Insbesondere vorteilhaft an der vorliegenden Erfindung ist somit, daß durch den unmittelbaren Datenaustausch zwischen zwei Mobilstationen bei vorgegebener Datenrate die benötigte Funkbandbreite halbiert werden kann bzw. daß die Datenrate bei vorgegebener Funkbandbreite verdoppelt werden kann. Ferner wird die Belastung der Basisresourcen reduziert.

Im folgenden werden bevorzugte Ausführungsformen der vorliegenden Erfindung unter Bezugnahme auf die beiliegenden Zeichnungen näher erläutert. Dabei zeigen die Zeichnungen im einzelnen:
Fig. 1a eine bevorzugte Ausführungsform des erfindungsgemäßen Systems zur schnurlosen Datenkommunikation, das eine Basisstation FP und vier Mobilstationen PP1, PP2, PP3 und PP4 umfaßt, wobei zwischen Basisstation FP und den Mobilstationer PP1 und PP2 je eine Funkverbindung besteht und wobei die Basisstation FP eine ISDN-Schnittstelle zu einem öffentlichen Fernmeldenetz aufweist;
Fig. 1b das Datenkommunikationssystem gemäß Fig. 1a, wobei die beiden Verbindungen zwischen der Basisstation FP und den Mobilstationen PP1 und PP2 abgebaut wurden und statt dessen eine unmittelbare Verbindung zwischen den Mobilstationen PP1 und PP2 eingerichtet wurde;
Fig. 2 eine weitere Ausführungsform des erfindungsgemäßen
Datenkommunikationssystems, bei dem eine logische Verbindung LV zwischen den Mobilstationen PP1 und PP4 durch die beiden physikalischen Verbindungen PVa und PVb realisiert wird, falls zwischen den Mobilstationen PP1 und PP4 keine physikalische Funkverbindung möglich ist; und
Fig. 3 ein Datenkommunikationssystem gemäß dem Stand der Technik, bei dem zwei logische Verbindungen LV1 und LV2 zwischen den Mobilstationen PP1 und PP2 bzw. PP3 und PP4 bestehen, wobei die Daten über vier physikalische Verbindungen PV1a, PV1b, PV2a und PV2b mittelbar über die Basisstation FP ausgetauscht werden.

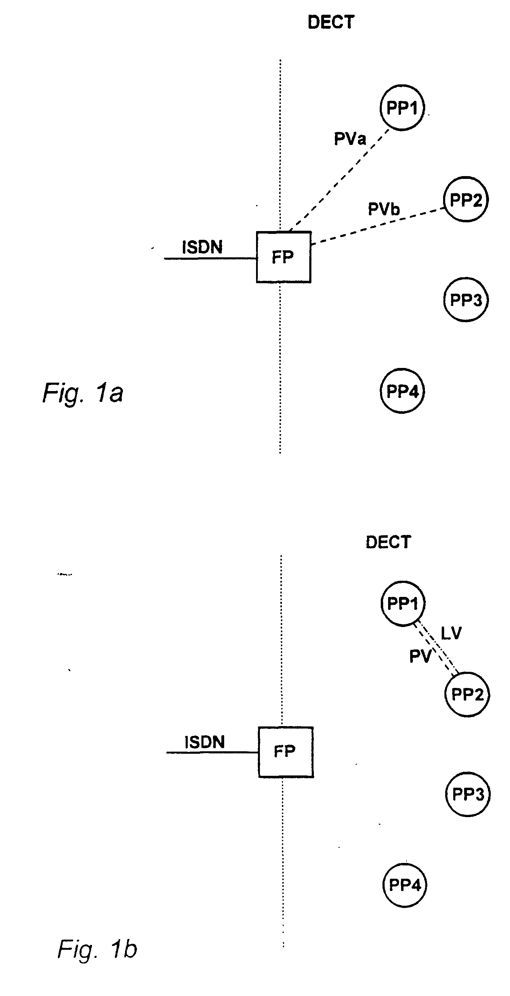

Fig. 1a und 1b zeigen eine bevorzugte Ausführungsform eines schnurlosen Datenkommunikationssystems gemäß der vorliegenden Erfindung. Unter schnurlosen Datenkommunikationssystemen sollen insbesondere Systeme verstanden werden, die auf dem DECT-Standard beruhen. Es kann sich jedoch auch um allgemeine Mobilfunksysteme, wie GSM etc. handeln. Insbesondere eignet sich die vorliegende Erfindung zur eleganten und kapazitätssparenden Datenübertragung über Bandbreiten, die höher sind als die, die für die Sprachübertragung benötigt werden. Jedoch ist das Wort Datenkommunikation nicht einschränkend auf die Übertragung von Computerdaten zu verstehen und umfaßt auch digitale Sprachdaten

Fig. 1a zeigt die Vorbereitungsphase für den Aufbau einer Direktverbindung zwischen den Mobilstationen PP1 und PP2. Über die beiden Verbindungen zwischen der Basisstation FP und den beiden Mobilstationen PP1 und PP2 werden die notwendigen Daten zum Aufbau der Direktverbindung in Fig. 1b zwischen den Mobilstationen PP1 und PP2 übertragen Anschließend wird eine physikalische Direktverbindung zwischen den Mobilstationen PP1 und PP2 eingerichtet, wie in Fig 1b durch die gestrichelte Linie dargestellt. Nach dem Aufbau der physikalischen Verbindung werden über diese Daten übertragen, wie dies mittels der Strichpunktlinie zwischen den Mobilstationen PP1 und PP2 in Fig. 1b dargestellt ist.

Mobilstationen im Sinne der vorliegenden Erfindung sind vor allem tragbare Computer (Laptops, Palmtops). Das erfindungsgemäße Datenkommunikationssystem kann aber auch für Tischcomputer eingesetzt werden. Ferner können auch schnurlose Telefone Mobilstationen im Sinne der vorliegenden Anmeldung sein. Mobilstationen können ferner alle Telekommunikationsendgeräte, wie Faxgeräte oder Anrufbeantworter, sein, die schnurlos an das Telekommunikationsnetz angebunden werden.

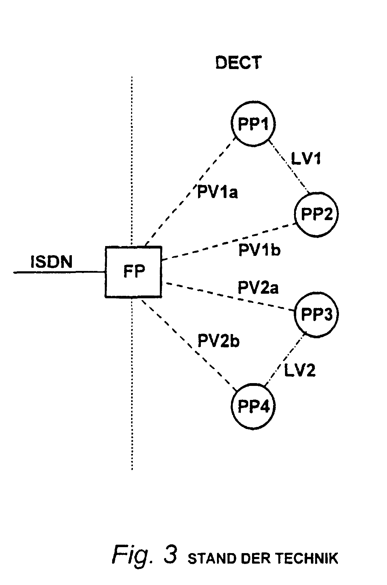

Gemäß dem DECT-Standard muß jede Verbindung über eine Basisstation geführt werden. Somit sind gemäß dem DECT-Standard für jede logische Verbindung LV1 und LV2 zwischen Mobilstationen zwei physikalische Verbindungen PV1a und PV1b bzw. PV2a und PV2b erforderlich (Fig. 3). Diese Konzeption ist insbesondere für DECT-Telefone, also Sprachdienste nach dem Generic Access Profile (GAP), gut geeignet, da die für eine Verbindung benötigte Bandbreite relativ gering ist. Eine DECT-konforme Direktverbindung zwischen zwei Mobilstationen läßt sich dadurch erreichen, daß mindestens eine, vorzugsweise alle Mobilstationen zusätzlich mit einer Basisfunktionalität ausgestattet sind. Die Basisfunktionalität in den Mobilstationen kann entweder permanent aktiv sein oder nur auf Bedarf zugeschaltet werden. Die Bedarfssteuerung kann dabei durch die Mobilstation selbst erfolgen oder durch die entsprechende Basisstation.

Gemäß dem DECT-Standard ist die Basisfunktionalität mit der permanenten Abstrahlung von sogenannten "Leerträgern" (Dummy-Baerer) verbunden. Im europäischen DECT-Standard sind zur Zeit je 120 Kanäle für Verbindungen zu Basisstationen (Uplink) und von Basisstationen (Downlink) vorgesehen. Bei einer etwas größeren Zahl von Mobilstationen in der Gegend von 20 bis 50 wird ein nennenswerter Anteil der insgesamt 240 Kanäle durch Leerträger belegt. Darüber hinaus werden durch die permanente Aktivierung der Basisfunktionalitat Resourcen in der Mobilstation selbst gebunden. Deshalb wird in der bevorzugten Ausfuhrungsform die Basisfunktionalität einer Mobilstation abgeschaltet, wenn keine Direktverbindung zu einer weiteren Mobilstation besteht. Eine weitere bevorzugte Ausführungsform der vorliegenden Erfindung geht über den DECT-Standard hinaus, indem die Basisfunktionalität permanent aktiviert ist, jedoch die Abstrahlung des Leerträgers (Dummy-Baerers) unterbleibt. Für diese bevorzugte Ausführungsform ist es erforderlich, daß alle Parameter der Basisfunktionalität in den Mobilstationen, wie Systemparameter, PSCN u.a., direkt aus den Parametern der Basisstation abgeleitet werden können oder auf anderem Weg den Mobilstationen bekanntgemacht werden.

Gemäß der bevorzugten Ausführungsform bauen die Mobilstationen Verbindungen zu anderen Mobilstationen mittelbar über die Basisstation auf (Fig. 1a). Die Basisstation erfragt bei beiden Mobilstationen relevante Daten, also beispielsweise, ob beide Mobilstationen Direktverbindungen unterstützen, welche Mobilstation eine Basisfunktionalität umfaßt, eine Identifikation der Basisfunktionalität der Mobilstation, eine Identifikation der Mobilstation, soweit erforderlich, einen nur für diese Verbindung verwendeten Session Key zur Authentisierung sowie Verschlüsselung sowie einen RFPI derjenigen Mobilstation, die die Basisfunktionalität übernimmt. Vorzugsweise werden nur diejenigen Informationen übertragen, die in der Basis- und den Mobilstationen nicht bereits vorliegen. Die entsprechenden Daten können dabei mit einer "Location Registration" oder "Location Update" Nachricht geändert bzw. gelöscht werden.

Gemäß einer bevorzugten Ausführungsform erfragt die Basisstation diese Informationen bereits bei der Anmeldung der beiden Mobilstationen und speichert die Informationen. Nachdem diese Informationen vorliegen, wird festgelegt, welche Mobilstation ihre Basisfunktionalität aktiviert. Hat eine Mobilstation bereits ihre Basisfunktionalität beispielsweise aufgrund einer bereits bestehenden Direktverbindung zu einer weiteren Mobilstation aktiviert, wird vorzugsweise die Basisfunktionalität der zweiten Mobilstation nicht zusätzlich aktiviert. Nach der Übertragung der notwendigen Informationen über die physikalischen Verbindungen zwischen Basisstation und den beiden Mobilstationen (Fig 1a) wird eine direkte Verbindung zwischen den beiden Mobilstationen PP1 und PP2 (Fig 1b) aufgebaut Gemäß einer bevorzugten Ausführungsform werden beim Aufbau der Direktverbindung zwischen den Mobilstationen PP1 und PP2 die Verbindungen zur Basisstation FP teilweise wieder abgebaut ("partial release"). Darunter ist vorzugsweise zu verstehen, daß die Verbindungen zur Basisstation FP physikalisch zum Beispiel noch 30 Sekunden weiterbestehen, aber über diese Verbindungen zumindest vorläufig kein weiterer Datenaustausch, weder von Steuerdaten noch von Nutzdaten, stattfindet. Der nur teilweise Abbau der Verbindungen zur Basisstation FP ermöglicht es, bei nicht erfolgreichem Aufbau der Direktverbindung zwischen den Mobilstationen PP1 und PP2 besonders schnell zu den Verbindungen zur Basisstation zurückzukehren und eine herkömmliche mittelbare Datenübertragung gemäß Fig. 3 durchzuführen.

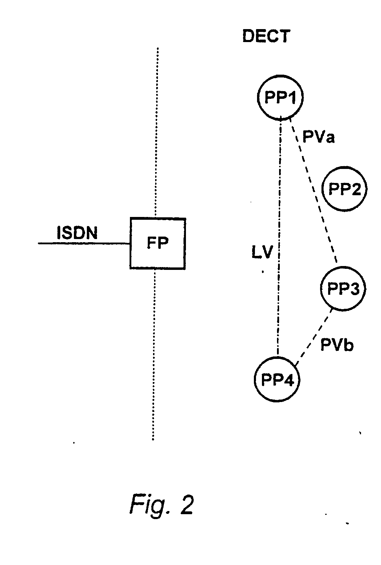

Alternativ zu der bisher beschriebenen Variante kann eine logische Verbindung LV zwischen zwei Mobilstationen PP1 und PP4 mittelbar über eine dritte Mobilstation PP3 und wiederum unter Umgehung der Basisstation FP aufgebaut werden, wie dies durch die Fig. 2 dargestellt ist.

Ferner können die physikalischen Verbindungen zwischen der Basisstation FP und den Mobilstationen PP1 und PP2 physikalisch weiterbestehen, aber logisch anders zugewiesen werden. Beispielsweise könnte die Verbindung zwischen der Basisstation FP und der Mobilstation PP1 nach dem Aufbau der Direktverbindung zur Datenfernübertragung von der Mobilstation PP1 über die ISDN-Schnittstelle der Basisstation FP zu einem externen Rechenzentrum verwendet werden. Darüber hinaus kann über die physikalische Verbindung zwischen der Mobilstation PP2 und der Basisstation FP und über die ISDN-Schnittstelle ein auf der zweiten Mobilstation laufendes Computerprogramm Zugang zum Internet erhalten werden. Wurde eine physikalische Verbindung für eine bestimmte Zeit, beispielsweise 30 Sekunden, nicht zur Datenübertragung benutzt, wird sie vollständig abgebaut. Alternativ dazu kann eine physikalische Verbindung sofort abgebaut werden, falls absehbar ist. daß sie für eine bestimmte Zeit nicht zur Datenübertragung erforderlich ist Schließlich konnen über die physikalischen Verbindungen PP1 und PP2 Nutzdaten übertragen werden. bis sie logisch anders zugewiesen oder abgebaut werden, um die Direktverbindung zu unterstützen.

Bevor Daten über eine physikalische Verbindung übertragen werden, durchlaufen sie üblicherweise einen Protokollstack. Gemäß dem OSI-Schichtenmodell umfaßt der Protokollstack sieben Schichten, wobei jede Schicht eine bestimmte Aufgabe erfüllt. Die Aufgaben umfassen beispielsweise Verschlüsselung, Hinzufügen von physikalischen oder logischen Adressen oder das Hinzufügen redundanter Information, um die Bitfehlerrate zu senken. Für den Informationsaustausch zwischen Anwendungsprogrammen, die auf Computern ausgeführt werden, werden alle sieben Schichten des OSI-Schichtenmodells verwendet, wohingegen zur Telefonie nur die unteren drei Schichten benötigt werden. Die logische Umwidmung von physikalischen Kanälen kann nun auf jeder der sieben logischen Schichten stattfinden. Ferner können die Schichten des OSI-Schichtenmodells feiner unterteilt werden, so daß mehr als sieben logische Schichten zur Verfügung stehen. Beispielsweise entsprechen die vier untersten Schichten des DECT-Protokollstacks, nämlich (Physical Layer (PHL), Medium Access Control Layer (MAC), Data Link Control Layer (DLC) und Network Layer (NWL)) den drei unteren Schichten des OSI-Schichtenmodells.

Wenngleich gemäß einer bevorzugten Ausführungsform des erfindungsgemäßen schnurlosen Datenkommunikationssystems die Mobilstationen auch Basisfunktionalität umfassen, bleibt die Hautpvermittlungsfunktion der Basisstation erhalten. Dies bedeutet insbesondere, daß alle Mobilstationen ständig sogenannte Paging Nachrichten von der Basisstation empfangen, um Verbindungen zu weiteren Mobilstationen oder zu einem externen Netzwerk aufbauen zu können. Daruber hinaus unterhält die Basisstation eine zentrale Datenbank für die Anmeldung der Mobilstationen. Bei der Anmeldung einer Mobilstation werden die Eigenschaften der Mobilstation, wie ihre Adresse, die Zahl der verfügbaren Kanäle und insbesondere, ob sie Basisfunktionalität umfaßt, um Direktverbindungen zu unterstützen, an die Basisstation übertragen Die Anmeldedaten werden vorzugsweise wie oben beschrieben in der Basisstation zentral gespeichert da auch nach dem Ausschalten einzelner Mobilstationen das Gesamtsystem noch voll funktionsfähig bleiben soll. Die Anmeldedaten werden unter anderem für folgende Zwecke in einem DECT-Datenkommunikationssystem benötigt: Authentisierung, Verschlüsselung und Steuerung des Verbindungsaufbaus. Diese Daten müssen den Mobilstationen zumindest teilweise von der Basisstation zur Verfügung gestellt werden.

Um Verbindungen zwischen Mobilstationen und Basisstation zu ermöglichen, müssen bei DECT-Systemen die Mobilstation bei der Basisstation angemeldet sein. Die Anmeldung kann dabei je nach bevorzugter Ausführungsform des schnurlosen Datenkommunikationssystems statisch oder dynamisch, manuell oder automatisch beispielsweise über die Funkverbindungen erfolgen. Gemäß einer bevorzugten Ausführungsform der vorliegenden Erfindung erfolgt eine Anmeldung einer Mobilstation bei einer weiteren Mobilstation mit Basisfunktionalität nur dann, wenn sie zur Datenkommunikation benötigt wird. Vorzugsweise wird eine Anmeldung lediglich für eine Verbindung verwendet. Auf diese Weise wird die Leistungsfähigkeit des Systems insbesondere bei schwankenden Anteilen von Mobilstationen verbessert. Darüber hinaus wird die Sicherheit des Datenkommunikationssystems erhöht, da gesendete Daten ihre Gültigkeit nach dem Verbindungsaufbau verlieren und daher von einem potentiellen Lauscher schwieriger abgehört werden können. In einer anderen bevorzugten Ausführungsform wird eine gegenseitige Anmeldung aller Mobilstationen realisiert.

Der DECT-Standard ist ein kombiniertes Zeit-Frequenzmultiplexverfahren, das auf 10 Frequenzen 12 Zeitschlitze für Verbindungen zu und von einer Basisstation, also insgesamt 24 Zeitschlitze, aufweist. Wie bereits oben erwähnt, ergeben sich dadurch insgesamt 240 Kanäle mit einer Übertragungskapazität von je 32 kBit/s. Folglich werden sowohl Mobil- als auch Basisstation verzugsweise mit 12 Empfangs- und 12 Sendekanälen ausgestattet sind. Nach Aufbau einer Verbindung zwischen der Basisstation FP und der ersten Mobilstation PP1 in Fig. 1a stehen in der Mobilstation noch maximal 11 Kanäle für die Direktverbindung zur Verfügung. Vorzugsweise werden davon tatsächlich entweder 4 oder 8 Kanäle zum Aufbau der Direktverbindung zwischen den Mobilstationen PP1 und PP2 in Fig 1b gebundeit Unter Erhöhung des Bauteilaufwandes in Mobil- oder Basisstationen können diese mit mehr als 12, vorzugsweise mit einem ganzzahligen Vielfachen an 12, Sende- und Empfangskanälen ausgestattet werden.

In den bisherigen Ausführungen zu der bevorzugten Ausführungsform der vorliegenden Erfindung wurde davon ausgegangen, daß für den Aufbau einer Direktverbindung zwischen einer ersten Mobilstation PP1 und einer zweiten Mobilstation PP2 (Fig. 1b) zwei physikalische Verbindungen, nämlich zwischen der Basisstation FP und den beiden Mobilstationen PP1 und PP2 erforderlich sind. Dies ist jedoch nicht zwingend erforderlich. Es sei angenommen, daß die Mobilstation PP1 den Verbindungsaufbau initiiert. Insbesondere dann, wenn die Mobilstation PP2 bereits ihre Basisfunktionalität aktiviert hat, ist die erste Mobilstation PP1 in der Lage, sich ohne Verbindung zwischen der Basisstation FP und der zweiten Mobilstation PP2 direkt bei der zweiten Mobilstation PP2 anzumelden. Eine Verbindung zwischen der ersten Mobilstation PP1 und der Basisstation FP ist aber weiterhin vorteilhaft, da die erste Mobilstation PP1 Informationen über die zweite Mobilstation PP2 aus der Datenbank der Basisstation FP benötigt. In der bevorzugten Ausführungsform des erfindungsgemäßen Datenkommunikationssystems ist es ferner möglich, die Basisfunktionalität der Mobilstationen durch Paging Nachrichten einzuschalten. Im DECT-Standard können an jeden von 320 Bit Datenblock 48 Bit Paging Nachrichten angehängt werden. Im Unterschied zu den 320 Datenbits werden von der Basisstation ausgesendete Paging Nachrichten von allen Mobilstationen ausgewertet. Da die Paging Nachrichten sozusagen Huckepack über eine Datenverbindung übertragen werden, kann jede Verbindung von der Basisstation FP zu einer beliebigen Mobilstation dazu verwendet werden, die Basisfunktionalität der zweiten Mobilstation PP2 zu aktivieren.

Anzumerken ist, daß auch mehrere Basisstationen vorhanden sein können und jede der beiden Mobilstationen für den direkten Kommunikationsaufbau vorher mit einer unterschiedlichen Basisstation kommuniziert Selbstverstandlich muß dabei eine interne Abstimmung zwischen den Basisstationen zusätzlich erfolgen.

Durch die Aktivierung der Basisfunktionalität in mehreren Mobilstationen entsteht ein Mehrzellensystem. Ein fiktiver Betrieb eines derartigen Mehrzellensystems setzt die Synchronität aller Mobilstationen und der Basisstation FP voraus. Da sich Mobilstationen gemäß dem DECT-Standard auf Basisstationen synchronisieren und nur in gewissem Rahmen Asynchronitäten zwischen Basisstationen ausgleichen können, muß insbesondere die Basisfunktionalität in den Mobilstationen auf die Basisstation synchronisiert werden. Dies erfolgt automatisch dadurch, daß die Mobilstationen über die Funkschnittstelle auf die Basisstation synchronisiert sind und ihrerseits ihre Basisfunktionalität darauf synchronisieren. An die Synchronität müssen dabei je nach Ausprägung des Datenkommunikationssystems Anforderungen bezüglich Rahmensynchronität (Frame-Synchronität, 10 ms Frame), Vielrahmensynchronität (Multiframe-Synchronität, 160 ms Multi Frame) sowie für die Verschlüsselung eine Synchronität der Multiframe Nummer hergestellt werden. Durch eine vollständige Synchronität können ferner gemeinsame "Zähler" für die Basisfunktionalität in den Mobilstationen verwendet werden.

Die Basisfunktionalität kann auf verschiedene Weisen in die Mobilstationen integriert werden. Gemäß der bevorzugten Ausführungsform verwenden Mobilfunktionalität und Basisfunktionalität einen gemeinsamen Chipsatz und ein gemeinsames Hochfrequenzsendeempfangsmodul. In anderen Ausführungsformen können zwei getrennte Chipsätze und/oder getrennte Hochfrequenzmodule verwendet werden.

Mobilstationen weisen die gleiche oder zumindest die gleiche Größenordnung von physikalischen Kanälen wie die Basisstation auf. Dabei liegt die Zahl der physikalischen Kanäle vorzugsweise bei 12 oder einem ganzzahligen Vielfachen davon. Falls eine Direktverbindung zwischen zwei Mobilstationen aufgrund der begrenzten Funkreichweite nicht möglich ist, ist es aufgrund der möglicherweise geringen Zahl von in der Basisstation zur Verfügung stehenden Kanäle vorteilhaft, die physikalischen Verbindungen nicht über die Basisstation, sondern über eine dritte Mobilstation zu führen. Dies ist in Figur 3 dargestellt Die logische Verbindung LV zwischen den Mobilstationen PP1 und PP4 wird durch zwei physikalische Verbindungen PVa und PVb über die dritte Mobilstation PP3 realisiert. Auf diese Weise wird die Basisstation FP entlastet und die Leistungsfähigkeit des Datenkommunikationssystems erhöht.

## Patentansprüche

1. Verfahren zur schnurlosen Datenkommunikation zwischen mindestens einer Basisstation sowie mindestens einer ersten und zweiten Teilnehmerstation, die jeweils über eine Luftschnittstelle über eine Vielzahl von Kanälen in Kommunikation treten können, und wobei das Verfahren folgende Schritte aufweist:
a) Aufbau einer ersten Verbindung zwischen der ersten Teilnehmerstation und der Basisstation,
b) Übertragen von Verbindungsinformationen für den Aufbau einer zweiten Verbindung zwischen der ersten und der zweiten Teilnehmerstation,
c) Aufbau der zweiten Verbindung zwischen der ersten und der zweiten Teilnehmerstation, und
d) Übertragen von Daten über die zweite Verbindung zwischen der ersten und zweiten Teilnehmerstation unter Umgehung der Basisstation,
wobei die Teilnehmerstationen, die Verbindungen zu anderen Teilnehmerstationen unter Umgehung der Basisstation unterstützen, Informationen über angemeldete Teilnehmerstationen speichern, wobei sich Teilnehmerstationen bei anderen Teilnehmerstationen nur zum Aufbau von Verbindungen zwischen zwei Teilnehmerstationen anmelden.

2. Verfahren zur schnurlosen Datenkommunikation nach Anspruch 1, dadurch gekennzeichnet, daß die erste Verbindung nach der Übertragung der notwendigen Verbindungsinformationen spätestens nach dem Aufbau der zweiten Verbindung wieder abgebaut wird.

3. Verfahren zur schnurlosen Datenkommunikation nach einem der Ansprüche 1 oder 2, **dadurch gekennzeichnet,** daß die zweite Verbindung mehr als einen Kanal umfaßt.

4. Verfahren zur schnurlosen Datenkommunikation nach einem der Ansprüche 1 bis 3, **dadurch gekennzeichnet**, daß für die erste Verbindung lediglich ein Kanal verwendet wird und für die zweite Verbindung vorzugsweise entweder 4 oder 8 Kanäle verwendet werden.

5. Verfahren zur schnurlosen Datenkommunikation nach einem der Ansprüche 1 bis 4, **dadurch gekennzeichnet**, daß die Basisstation Informationen über jede angemeldete Teilnehmerstation speichert und insbesondere Informationen darüber speichert, ob eine bestimmte Teilnehmerstation Verbindungen zu einer anderen Teilnehmerstation unter Umgehung der Basisstation unterstützt.

6. Verfahren zur schnurlosen Datenkommunikation nach einem der Ansprüche 1 bis 5, **dadurch gekennzeichnet**, daß die Basisstation und die Teilnehmerstationen synchronisiert sind.

7. Verfahren zur schnurlosen Datenkommunikation nach einem der Ansprüche 1 bis 6, **dadurch gekennzeichnet**, daß die Basisstation einen Datenaustausch zwischen angemeldeten Teilnehmerstationen und externen Teilnehmerstationen über eine weitere Schnittstelle ermöglicht.

8. Verfahren zur schnurlosen Datenkommunikation nach einem der Ansprüche 1 bis 7, **dadurch gekennzeichnet**, daß, falls eine unmittelbare zweite Verbindung zwischen der ersten und der zweiten Teilnehmerstation nicht möglich ist, eine mittelbare Verbindung zwischen der ersten und zweiten Teilnehmerstation über eine dritte Teilnehmerstation aufgebaut wird.

9. Verfahren zur schnurlosen Datenkommunikation nach einem der Ansprüche 1 bis 8, **dadurch gekennzeichnet,** daß während oder nach dem Aufbau der ersten Verbindung und vor dem Aufbau der zweiten Verbindung eine dritte Verbindung zwischen der Basisstation und der zweiten Teilnehmerstation aufgebaut wird, und über die dritte Verbindung weitere Verbindungsinformationen für den Aufbau der zweiten Verbindung zwischen der Basisstation und der zweiten Teilnehmerstation übertragen werden.

10. Verfahren zur schnurlosen Datenkommunikation nach Anspruch 9, **dadurch gekennzeichnet,** daß die dritte Verbindung nach Übertragung der weiteren Verbindungsinformationen für den Aufbau der zweiten Verbindung spätestens nach dem Aufbau der zweiten Verbindung zumindest teilweise wieder abgebaut wird.

11. Verfahren zur schnurlosen Datenkommunikation nach einem der Ansprüche 1 bis 8, **dadurch gekennzeichnet,** daß die Luftschnittstelle dem DECT-Standard entspricht und damit die Teilnehmerstationen, die Verbindungen zu anderen Teilnehmerstationen unter Umgehung der Basisstation unterstützen, eine aktivierbare Basisfunktionalität umfassen.

12. Verfahren zur schnurlosen Datenkommunikation nach Anspruch 11, **dadurch gekennzeichnet,** daß über die erste Verbindung ein Session Key zwischen der Basisstation und der ersten Teilnehmerstation übertragen wird und ferner eine Identifikation der zweiten Teilnehmerstation zwischen der ersten Teilnehmerstation und der Basisstation übertragen wird.

13. Verfahren zur schnurlosen Datenkommunikation nach einem der Ansprüche 9 oder 12, **dadurch gekennzeichnet,** daß die Basisfunktionalität der ersten Teilnehmerstation im Falle, daß momentan keine Verbindung zu einer anderen Teilnehmerstation unter Umgehung der Basisstation besteht, aktiviert bleibt und von der ersten Teilnehmerstation kein Leerträger gesendet wird.

14. System zur schnurlosen Datenkommunikation, zumindest bestehend aus einer Basisstation sowie zumindest einer ersten und zweiten Teilnehmerstation, wobei die Basisstation und die erste und die zweite Teilnehmerstation Sende-/-Empfangseinrichtungen aufweisen, mittels denen jeweils zwischen einer Teilnehmerstation und der Basisstation über eine Vielzahl von Kanälen Daten übertragbar sind, und wobei die Basisstation Einrichtung zum Aufbau einer ersten Verbindung zwischen der ersten Teilnehmerstation und der Basisstation aufweist,
wobei die Basisstation Einrichtungen zum Aufbau einer ersten Verbindung zwischen der ersten Teilnehmerstation und der Basisstation aufweist, über die Verbindungsinformationen für den Aufbau einer zweiten Verbindung zwischen der ersten Teilnehmerstation und der zweiten Teilnehmerstation übertragen werden,
wobei die erste und die zweite Teilnehmerstation jeweils Einrichtungen aufweisen, die basierend auf den von der Basisstation über die erste Verbindung an die erste Teilnehmerstation übertragenen Verbindungsinformationen den Aufbau der zweiten Verbindung zwischen der ersten und zweiten Teilnehmerstation unter Umgehung der Basisstation gestatten sowie eine Datenkommunikation zwischen der ersten und zweiten Teilnehmerstation über die zweite Verbindung gestatten,
und wobei die Teilnehmerstationen, die Verbindungen zu anderen Teilnehmerstationen unter Umgehung der Basisstation unterstützen, eine Einrichtung zum Speichern von Informationen über angemeldete Teilnehmerstationen besitzen, wobei sich Teilnehmerstationen bei anderen Teilnehmerstationen zum Aufbau von Verbindungen zwischen zwei Teilnehmerstationen unter Umgehung der Basisstation anmelden.

15. System zur schnurlosen Datenkommunikation nach Anspruch 14, **dadurch gekennzeichnet**, daß die zweite Verbindung mehr als einen Kanal umfaßt.

16. System zur schnurlosen Datenkommunikation nach einem der Ansprüche 14 oder 15, **dadurch gekennzeichnet**, daß für die erste Verbindung lediglich ein Kanal verwendet wird und für die zweite Verbindung vorzugsweise entweder 4 oder 8 Kanäle verwendet werden.

17. System zur schnurlosen Datenkommunikation nach einem der Ansprüche 14 bis 16, **dadurch gekennzeichnet,** daß die Basisstation über eine Speichereinrichtung verfügt, in der Informationen über jede angemeldete Teilnehmerstation gespeichert sind, insbesondere Informationen darüber gespeichert sind, ob eine bestimmte Teilnehmerstation Verbindungen zu anderen Teilnehmerstationen unter Umgehung der Basisstation unterstützt.

18. System zur schnurlosen Datenkommunikation nach einem der Ansprüche 14 bis 17, **dadurch gekennzeichnet,** daß die Basisstation und die Teilnehmerstationen Einrichtungen zur Synchronisation umfassen.

19. System zur schnurlosen Datenkommunikation nach einem der Ansprüche 14 bis 19, **dadurch gekennzeichnet,** daß die Basisstation neben der durch die Sende-/Empfangseinrichtungen gebildeten Schnittstelle eine weitere Schnittstelle aufweist, um einen Datenaustausch der internen Teilnehmerstationen mit externen Teilnehmerstationen zu ermöglichen.

20. System zur schnurlosen Datenkommunikation nach einem der Ansprüche 14 bis 19, **dadurch gekennzeichnet,** daß zumindest eine Teilnehmerstation durch eine Computereinrichtung, vorzugsweise einen Laptop, gebildet wird.

21. System zur schnurlosen Datenkommunikation nach einem der Ansprüche 14 bis 20, **dadurch gekennzeichnet,** daß Einrichtungen vorgesehen sind, die, falls eine unmittelbare zweite Verbindung zwischen der ersten und der zweiten Teilnehmerstation nicht möglich ist, eine mittelbare Verbindung zwischen der ersten und zweiten Teilnehmerstation über eine dritte Teilnehmerstation ermöglichen.

22. System zur schnurlosen Datenkommunikation nach einem der Ansprüche 14 bis 21, **dadurch gekennzeichnet**, daß die Basisstation ferner Einrichtungen zum Aufbau einer dritten Verbindung zwischen der Basisstation und der zweiten Teilnehmerstation aufweist, über die weitere Verbindungsinformationen für den Aufbau der zweiten Verbindung übertragen werden.

23. System zur schnurlosen Datenkommunikation nach einem der Ansprüche 14 bis 22, **dadurch gekennzeichnet,** daß die Sende-/Empfangseinrichtungen dem DECT-Standard entsprechen und die Teilnehmerstationen, die Verbindungen unter Umgehung der Basisstation unterstützen, eine aktivierbare Basisfunktionalität umfassen.

24. System zur schnurlosen Datenkommunikation nach Anspruch 23, **dadurch gekennzeichnet,** daß über die erste Verbindung ein Session Key zwischen der Basisstation und der ersten Teilnehmerstation übertragbar ist und ferner eine Identifikation der zweiten Teilnehmerstation zwischen der ersten Teilnehmerstation und der Basisstation übertragbar ist.

25. System zur schnurlosen Datenkommunikation nach einem der Ansprüche 23 oder 24, **dadurch gekennzeichnet**, daß die Basisfunktionalität der ersten Teilnehmerstation so ausgestaltet ist, daß sie bei Nichtvorhandensein einer momentanen Verbindung zu einer anderen Teilnehmerstation aktiviert bleibt und kein Leerträger (Dummy-Bearer) gesendet wird.

## Claims

1. Method for cordless data communication between at least one base station and at least a first and a second subscriber station, each of which being able to communicate via an air interface via a plurality of channels, the method comprising the steps of:
a) setting up a first connection between the first subscriber station and the base station,
b) transmitting connection information for the set-up of a second connection between the first and the second subscriber station,
c) setting up the second connection between the first and the second subscriber station, and
d) transmitting data via the second connection between the first and the second subscriber station thereby passing by the base station,
wherein the subscriber stations which support the connections to other subscriber stations in passing by the base station store information about registered subscriber stations, wherein subscriber stations register at other subscriber stations only for setting up connections between two subscriber stations.

2. Method for cordless data communication according to claim 1, characterized in that after transmitting the necessary connection information, the first connection is at least partially released at the latest after the set-up of the second connection.

3. Method for cordless data communication according to one of claims 1 or 2, characterized in that the second connection comprises more than one channel.

4. Method for cordless data communication according to one of claims 1 to 3, characterized in that only one channel is used for the first connection and preferably 4 or 8 channels are used for the second connection.

5. Method for cordless data communication according to one of claims 1 to 4, characterized in that the base station stores information about each registered subscriber station and in particular information about whether a certain subscriber station supports connections to a different subscriber station thereby passing by the base station.

6. Method for cordless data communication according to one of claims 1 to 5, characterized in that the base station and the subscriber stations are synchronized.

7. Method for cordless data communication as claimed in one of claims 1 to 6, characterized in that the base station enables an exchange of data between registered subscriber stations and external subscriber stations via a further interface.

8. Method for cordless data communication according to one of claims 1 to 7, characterized in that in case a direct second connection between the first and the second subscriber station is not possible, an indirect connection is set-up between the first an the second subscriber station via a third subscriber station.

9. Method for cordless data communication according to one of claims 1 to 8, characterized that during or after the set-up of the first connection and before the set-up of the second connection, a third connection between the base station and the second subscriber station is set-up, and via the third connection further connection information for the set-up of the second connection between the base station and the second subscriber station is transmitted.

10. Method for cordless data communication according to claim 9, characterized in that after transmitting the further connection information for the set-up of the second connection the third connection is at least partially released at the latest after the set-up of the second connection.

11. Method for cordless data communication according to one of claims 1 to 8, characterized in that the air interface corresponds to the DECT standard and therefore the subscriber stations which support connections to other subscriber stations in passing by the base station comprise an activatable base functionality.

12. Method for cordless data communication according to claim 11, characterized in that via the first connection a session key is transmitted between the base station and the first subscriber station, and furthermore an identification of the second subscriber station is transmitted between the first subscriber station and the base station.

13. Method for cordless data communication according to one of claims 9 or 12, characterized in that the base functionality of the first subscriber station remains activated in the case that currently no connection exists to a different subscriber station in passing by the base station, and that a dummy bearer is not transmitted by the first subscriber station.

14. System for cordless data communication, at least consisting of a base station and at least a first and a second subscriber station, wherein the base station and the second subscriber station comprise transceiver means by means of which data can be transmitted between a subscriber station and a base station via a plurality of channels, and wherein the base station comprises a means for setting up a first connection between the first and the second subscriber station and the base station,
wherein the base station comprises means for setting up a first connection between the first subscriber station and the base station through which connection information for the set-up of a second connection between the first subscriber station and the second subscriber station is transmitted,
wherein the first and second subscriber station comprise means which based on the connection information transmitted by the vase station via the first connection to the first subscriber station allow the set-up of the second connection between the first and the second subscriber station thereby passing by the base station, and allow a data communication between the first and the second subscriber station via the second connection, and
wherein the subscriber stations which support connections to other subscriber stations in passing by the base station have a means for storing information about registered subscriber stations, wherein subscriber stations register at other subscriber stations for setting up connections between two subscriber stations in passing by the base station.

15. System for cordless data communication according to claim 14, characterized in that the second connection comprises more than one channel.

16. System for cordless data communication according to one of claims 14 or 15, characterized in that only one channel is used for the first connection and preferably either 4 or 8 channels are used for the second connection.

17. System for cordless data communication according to one of claims 14 to 16, characterized in that the base station has a memory means in which information about every registered subscriber station is stored, in particular information about whether a certain subscriber station supports connections to different subscriber stations thereby passing by the base station.

18. System for cordless data communication according to one of claims 14 to 17, characterized in that the base station and the subscriber stations comprise means for synchronization.

19. System for cordless data communication according to one of claims 14 to 19, characterized in that the base station comprises a further interface besides the interface formed by the transceiver means, to enable a data exchange of the internal subscriber stations with external subscriber stations.

20. System for cordless data communication according to one of claims 14 to 19, characterized in that at least one subscriber station is formed by a computer means, preferably a laptop.

21. System for cordless data communication according to one of claims 14 to 20, characterized in that means are provided which in case a direct connection between the first and the second subscriber stations is not possible enable an indirect connection between the first and the second subscriber station via a third subscriber station.

22. System for cordless data communication according to one of claims 14 to 21, characterized in that the base station further comprises means for setting up a third connection between the base station and the second subscriber station through which the further connection information for the set-up of the second connection is transmitted.

23. System for cordless data communication according to one of claims 14 to 22, characterized in that the transceiver means correspond to the DECT standard and the subscriber stations supporting the connection in passing by the base station comprise an activatable base functionality.

24. System for cordless data communication according to claim 23, characterized in that via the first connection a session key between the base station and the first subscriber station may be transmitted and furthermore an identification of the second subscriber station between the first subscriber station and the base station may be transmitted.

25. System for cordless data communication according to one of claims 23 or 24, characterized in that the base functionality of the first subscriber station is designed such that it remains activated in the event of an absence of a current connection to a different subscriber station and that no dummy bearer is transmitted.

## Revendications

1. Procédé pour la communication sans fil de données entre au moins une station de base et au moins une première et une seconde stations d'abonné qui peuvent chacune entrer en communication via une interface aérienne par l'intermédiaire d'une pluralité de canaux, le procédé comportant les étapes suivantes :
a) établissement d'une première liaison entre la première station d'abonné et la station de base,
b) transmission d'informations de liaison pour l'établissement d'une seconde liaison entre la première et la seconde stations d'abonné,
c) établissement de la seconde liaison entre la première et la seconde stations d'abonné, et
d) transmission de données via la seconde liaison entre la première et la seconde stations d'abonné sans passer par la station de base,
dans lequel les stations d'abonné, qui soutiennent des liaisons avec d'autres stations d'abonné sans passer par la station de base, mémorisent des informations sur des stations d'abonné enregistrées, des stations d'abonné ne s'enregistrant auprès d'autres stations d'abonné que pour établir des liaisons entre deux stations d'abonné.

2. Procédé pour la communication sans fil de données selon la revendication 1, **caractérisé** en ce que la première liaison, après la transmission des informations de liaison nécessaires, est de nouveau supprimée au plus tard après l'établissement de la seconde liaison.

3. Procédé pour la communication sans fil de données selon une des revendications 1 ou 2, **caractérisé** en ce que la seconde liaison comprend plus d'un canal.

4. Procédé pour la communication sans fil de données selon une des revendications 1 à 3, **caractérisé** en ce que pour la première liaison on utilise seulement un canal et pour la seconde liaison, de préférence soit 4 soit 8 canaux.

5. Procédé pour la communication sans fil de données selon une des revendications 1 à 4, **caractérisé** en ce que la station de base mémorise des informations sur chaque station d'abonné enregistrée et en particulier des informations sur le fait qu'une certaine station d'abonné soutient des liaisons avec une autre station d'abonné sans passer par la station de base.

6. Procédé pour la communication sans fil de données selon une des revendications 1 à 5, **caractérisé** en ce que la station de base et les stations d'abonné sont synchronisées.

7. Procédé pour la communication sans fil de données selon une des revendications 1 à 6, **caractérisé** en ce que la station de base permet un échange de données entre des stations d'abonné enregistrées et des stations d'abonné externes par l'intermédiaire d'une autre interface.

8. Procédé pour la communication sans fil de données selon une des revendications 1 à 7, **caractérisé** en ce que dans le cas où une seconde liaison directe entre la première et la seconde stations d'abonné n'est pas possible, on établit une liaison indirecte entre la première et la seconde stations d'abonné par l'intermédiaire d'une troisième station d'abonné.

9. Procédé pour la communication sans fil de données selon une des revendications 1 à 8, **caractérisé** en ce que pendant ou après l'établissement de la première liaison et avant l'établissement de la seconde liaison, on établit une troisième liaison entre la station de base et la seconde station d'abonné, et on transmet, via la troisième liaison, d'autres informations de liaison pour l'établissement de la seconde liaison entre la station de base et la seconde station d'abonné.

10. Procédé pour la communication sans fil de données selon la revendication 9, **caractérisé** en ce que la troisième liaison, après la transmission des autres informations de liaison pour l'établissement de la seconde liaison, est de nouveau supprimée au moins en partie au plus tard après l'établissement de la seconde liaison.

11. Procédé pour la communication sans fil de données selon une des revendications 1 à 8, **caractérisé** en ce que l'interface aérienne correspond au standard DECT et que les stations d'abonné, qui soutiennent des liaisons avec d'autres stations d'abonné sans passer par la station de base, comprennent donc une fonctionnalité de base susceptible d'être activée.

12. Procédé pour la communication sans fil de données selon la revendication 11, **caractérisé** en ce que via la première liaison, une clé de session est transmise entre la station de base et la première station d'abonné et qu'en outre une identification de la seconde station d'abonné est transmise entre la première station d'abonné et la station de base.

13. Procédé pour la communication sans fil de données selon une des revendications 9 ou 12, **caractérisé** en ce que la fonctionnalité de base de la première station d'abonné reste activée dans le cas où il n'existe momentanément aucune liaison avec une autre station d'abonné sans passer par la station de base, et que la première station d'abonné n'émet pas de support fictif.

14. Système pour la communication sans fil de données, composé au moins d'une station de base et d'au moins une première et une seconde stations d'abonné, la station de base et la première et la seconde stations d'abonné comportant des dispositifs d'émission/réception au moyen desquels on peut transmettre des données par l'intermédiaire d'une pluralité de canaux entre une station d'abonné et la station de base, et la station de base comportant un dispositif pour établir une première liaison entre la première station d'abonné et la station de base,
la station de base comportant des dispositifs pour établir une première liaison entre la première station d'abonné et la station de base via laquelle on transmet des informations de liaison pour l'établissement d'une seconde liaison entre la première station d'abonné et la seconde station d'abonné,
la première et la seconde stations d'abonné comportant respectivement des dispositifs qui, sur la base des informations de liaison transmises par la station de base à la première station d'abonné via la première liaison, permettent d'établir la seconde liaison entre la première et la seconde stations d'abonné sans passer par la station de base et permettent une communication de données entre la première et la seconde stations d'abonné via la seconde liaison,
et les stations d'abonnés, qui soutiennent des liaisons avec d'autres stations d'abonné sans passer par la station de base, possédant un dispositif pour mémoriser des informations sur des stations d'abonné enregistrées, des stations d'abonné s'enregistrant auprès d'autres stations d'abonné pour établir des liaisons entre deux stations d'abonné sans passer par la station de base.

15. Système pour la communication sans fil de données selon la revendication 14, **caractérisé** en ce que la seconde liaison comprend plus d'un canal.

16. Système pour la communication sans fil de données selon une des revendications 14 ou 15, **caractérisé** en ce que pour la première liaison on utilise seulement un canal et pour la seconde liaison, de préférence soit 4 soit 8 canaux.

17. Système pour la communication sans fil de données selon une des revendications 14 à 16, caractérisé en ce que la station de base dispose d'un dispositif de mémorisation dans lequel sont mémorisées des informations sur chaque station d'abonné enregistrée, en particulier des informations sur le fait qu'une certaine station d'abonné soutient des liaisons avec une autre station d'abonné sans passer par la station de base.

18. Système pour la communication sans fil de données selon une des revendications 14 à 17, **caractérisé** en ce que la station de base et les stations d'abonné comprennent des dispositifs de synchronisation.

19. Système pour la communication sans fil de données selon une des revendications 14 à 19, **caractérisé** en ce que la station de base, outre l'interface formée par les dispositifs d'émission/réception, comporte une interface supplémentaire pour permette un échange de données entre les stations d'abonné internes et des stations d'abonné externes.

20. Système pour la communication sans fil de données selon une des revendications 14 à 19, **caractérisé** en ce qu'au moins une station d'abonné est formée par un dispositif informatique, de préférence par un laptop.

21. Système pour la communication sans fil de données selon une des revendications 14 à 20, **caractérisé** en ce qu'il est prévu des dispositifs qui, dans le cas où une seconde liaison directe entre la première et la seconde stations d'abonné n'est pas possible, établissent une liaison indirecte entre la première et la seconde stations d'abonné par l'intermédiaire d'une troisième station d'abonné.

22. Système pour la communication sans fil de données selon une des revendications 14 à 21, **caractérisé** en ce que la station de base comporte en outre des dispositifs pour établir une troisième liaison entre la station de base et la seconde station d'abonné, via laquelle on transmet des informations de liaison pour l'établissement de la seconde liaison.

23. Système pour la communication sans fil de données selon une des revendications 14 à 22, **caractérisé** en ce que les dispositifs d'émission/réception correspondent au standard DECT et les stations d'abonné, qui soutiennent des liaisons sans passer par la station de base, comprennent une fonctionnalité de base susceptible d'être activée.

24. Système pour la communication sans fil de données selon la revendication 23, **caractérisé** en ce que via la première liaison, une clé de session est transmissible entre la station de base et la première station d'abonné et qu'en outre une identification de la seconde station d'abonné est transmissible entre la première station d'abonné et la station de base.

25. Système pour la communication sans fil de données selon une des revendications 23 ou 24, caractérisé en ce que la fonctionnalité de base de la première station d'abonné est conçue de telle sorte qu'en l'absence d'une liaison momentanée avec une autre station d'abonné, elle reste activée et qu'aucun support fictif (Dummy-Bearer) n'est émis.
